Europäisches Patentamt

European Patent Office

Office européen des brevets

(19)

(11) Publication number: 0 146 909
A2

## EUROPEAN PATENT APPLICATION

(12)

(21) Application number: 84115688.8

(22) Date of filing: 18.12.84

(51) Int. Cl.⁴: **B 01 J 20/20**
C 01 B 31/08, C 01 B 13/02
C 01 B 23/00

(30) Priority: 21.12.83 US 563904

(43) Date of publication of application:
03.07.85 Bulletin 85/27

(84) Designated Contracting States:
DE GB NL

(71) Applicant: AIR PRODUCTS AND CHEMICALS, INC.
Route no. 222
Trexlertown Pennsylvania 18087(US)

(72) Inventor: Verma, Shyam K.
229 South Sparks Street
State College, PA 16801(US)

(72) Inventor: Walker, Philip L., Jr.
210 Seneca Circle
State College, PA 16801(US)

(74) Representative: Sandmair, Kurt, Dr. Dr. et al,
Patentanwälte Dr. Berg Dipl.-Ing. Stapf Dipl.-Ing.
Schwabe Dr. Dr. Sandmair Postfach 86 02 45
Stuntzstrasse 16
D-8000 München 86(DE)

(54) Carbon molecular sieves.

(57) Molecular sieve carbons of tailored pore aperture size are prepared by sorbing a hydrocarbon, preferably propylene, in a degassed micropore-containing carbon substrate at an intermediate temperature, removing the physically held hydrocarbon while retaining at the pore apertures irreversibly fixed (chemisorbed or polymerized) hydrocarbon, and cracking the retained hydrocarbon at significantly higher temperature to deposit pyrocarbon at the pore apertures. To protect these molecular sieve carbons and other gas-sorbing carbons from loss of capacity and/or selectivity by exposure to moisture and/or oxygen, these carbons are treated with hydrogen at superatmospheric pressure.

EP 0 146 909 A2

211-P-US02902

CARBON MOLECULAR SIEVES

## TECHNICAL FIELD

This invention relates to the preparation of carbon molecular sieves of controlled pore structure and their use in adsorptive gas separation.

## BACKGROUND OF THE INVENTION

The preparation of carbon molecular sieves has been extensively described in technical literature and a number of different kinds of carbon molecular sieves are commercially available. These materials are of particular interest for separation of different gas species from mixtures containing the same, because of their relative chemical inertness, lower cost of manufacture as compared to siliceous molecular sieve zeolites and their potential for more precise control of size of the pore apertures therein.

Munzner, et al., U.S. Patent No. 3,801,513, discloses the preparation of certain carbon-containing molecular sieves by treatment of coke having a content of volatile components of up to 5%, with a carbonaceous substance at thermal cracking temperature to effect deposition of carbon in the coke framework, thereby reducing the size of the pores existing in the starting coke. The molecular sieves thus obtained are stated to adsorb oxygen more readily than nitrogen or argon, from gas mixtures. The deposition of carbon in the pores of the coke is carried out by heating the coke at a temperature between 600-900°C while a gaseous stream of the crackable carbonaceous material is passed into contact with the coke. As a result of carbon deposition therein the effective average size of the pores is reduced to less than about 0.3 millimicrons.

Studies of the modification of the gaseous adsorption properties of the solid carbon substrate by deposition of carbon in the pore mouth of the substrate are reported by Moore, S.V. and Trimm, D. L. in Carbon, 1977, vol. 15 at pp 177-180. The molecular sieves therein described were prepared by deposition of carbon, produced by pyrolysis of benzene, onto Calgon Activated Carbon, designated MSC-V, having an initial narrow pore size distribution around the diameter of 0.5 to 0.55 nm. In preparation, the substrate carbon sample, after being flushed with nitrogen at room temperature, and while continuing nitrogen flow, was increased in temperature by stages at several temperature levels for indicated time periods until brought to final reaction temperature (812-967°C) (1085-1240°K), at which temperature benzene in nitrogen carrier gas was admitted to the reactor. It was found that the effectiveness of the sieving action in oxygen-nitrogen separation was dependent upon the amount of carbon deposited and on the temperature of deposition.

Other studies by Chihara, K., et al., reported in Carbon 1979, vol. 17 at pages 339-343, are concerned with the control of diffusivities in micropores of molecular sieve carbon. The carbon molecular sieves were prepared by equilibrium adsorption respectively of ethyl benzene and styrene in the substrate carbon at 150-400°C followed by heat treatment at 400°C. It was found that the amount of carbon deposited after the heat treatment is a function of the adsorption temperature. The diffusivities of nitrogen and oxygen, measured by the chromatographic method, were found to decrease sharply with the small increase of the amount of carbon deposited. The method was found not to be effective for increasing the ratio of the micropore diffusivities of $O_2$ and $N_2$.

An article by Juntgen, H. et al., in Fuel, 1981, vol. 60, pp 817-822, discusses the different mechanisms of gas separation of two types of molecular sieve carbons. The substrate carbon in both types is coal which has been oxidized in pulverized form and shaped to granules with incorporation of a binder and then carbonized. One of the molecular sieve types, designated CMSH2 is produced by slight steam activation of the initial granules, thereby increasing the pore diameter. The other molecular sieve type, designated CMSN2 is produced by hydrocarbon treatment of the initial granules under cracking conditions in order to deposit carbon exactly on the mouth of the pores, thereby reducing pore diameter. The CMSH2 product is to be used for the recovery of hydrogen from coke oven gas or recovery of He from gas mixtures. The CMSN2 type is stated to be useful in adsorption of $O_2$ from air. The mechanism involved when the CMSN2 type is employed in a PSA process is based on the kinetic-controlled gas diffusion caused by the constrictions of the pore apertures. The diameters of the "bottle necks" are in the same range as those of the molecules; since an oxygen molecule has a smaller diameter than a nitrogen molecule, it can penetrate into the pores of the molecular sieve much quicker. In the CMSH2 type of sieve, the pore system is sufficiently wide to enable fast diffusion and the separation of the gas molecules is by selective adsorption.

0146909

- 4 -

In extensive experiments leading to the present invention, it was observed that in the preparation of micropore molecular sieves by pyrolysis of hydrocarbons on the substrate by known methods, the produced pyrocarbon is deposited on internal and external surfaces of the substrate carbon. Nonuniform carbon deposition thus undesirably blocks some of the pores and reduces the adsorption capacity.

## SUMMARY OF THE INVENTION

It has now been found, in accordance with the present invention, that carbon molecular sieves of controlled pore structure can be prepared by depositing pyrocarbon in the microporous carbon substrate at the apertures only, keeping the adsorption volume intact. This is achieved by initial contact of the carbon substrate with a selected hydrocarbon species at temperatures significantly below the thermal cracking temperature of such hydrocarbon, pumping off the physically sorbed hydrocarbon and subsequently cracking the retained hydrocarbon at elevated temperature to deposit carbon at the pore entrances. Thus, there are obtained reproducible carbon molecular sieves having finely tailored pore apertures and exhibiting improved performance in separation from their admixture gas components of closely similar boiling points and of about the same kinetic diameter. Without being bound to any particular explanation of the mechanism involved, it is believed that, at the initial contact of the selected hydrocarbon at below its pyrolysis temperature, there is a controlled irreversible uptake of a part of such hydrocarbon by the substrate, which may be due to its chemisorption or initial polymerization of the hydrocarbon or to both these mechanisms. By subsequent cracking of the chemisorbed hydrocarbon and/or the polymer formed therefrom, the size of the pore entrance can be adjusted to desired level depending on the amount of hydrocarbon irreversibly laid down and the size of the apertures originally present in the starting carbon substrate.

In a preferred embodiment, the carbon sieves thus produced in accordance with the invention are rendered chemically inert towards adverse effects by $O_2$ and $H_2O$, by passivating their active surfaces by treatment with hydrogen.

The carbon sieves prepared in accordance with the invention find their most beneficial advantage when used in the separation of gases which closely resemble each other in many molecular aspects, such as in the separation of argon from oxygen in mixtures containing these.

BRIEF DESCRIPTION OF THE DRAWINGS

Figure 1 is a schematic sketch of laboratory apparatus employed in testing of the various carbon molecular sieve adsorbents.

Figures 2 to 8 are diffusion plots showing uptake of argon (Ar) and oxygen ($O_2$) respectively in cc/g of carbon substrate at progressive time intervals (in minutes) of gas contact.

Figure 9 is a series of diffusion plots showing the effect of wet air on storage of carbon adsorbent.

Figure 10 is a series of diffusion plots showing the effect of passivation of the carbon adsorbent by hydrogen treatment.

## DETAILED DESCRIPTON

The substrate carbon employed in practice of the invention is preferably one having a narrow pore size distribution and having pores with relatively smaller apertures. The latter property is important so that the molecular sieving of small molecules can be achieved with the deposition of small amounts of carbon. On subsequent degassing to remove that portion of the hydrocarbon which is only physically held and cracking the remaining hydrocarbon, the resulting pyrocarbon is deposited precisely at the pore apertures so that no significant volume is lost to the depositing carbon. In contrast thereto with starting carbon substrates containing larger pores that are easily penetrated by the hydrocarbon, the pyrocarbon formed by subsequent cracking is deposited on the walls of the pore and occupies a significant portion of the pore volume. Among the preferred substrates are activated carbons having a pore size in the 0.5 to 0.55 nm range, a commercially available type of which is known as "MSC-V" (Calgon Co.). Another commercially available carbon molecular sieve exhibiting good performance after treatment in accordance with the invention is that designated Carbon "A" (Bergbau-Forschung, West Germany), which has an as received pore size of about 0.52 nm or less. Other carbon substrates that can be employed as starting materials include sorptive microporous carbons made from anthracite and bituminous coal products and gas adsorbent synthetic microporous carbons prepared by carbonization of carbonaceous polymers, such as polyvinylidene chloride.

The hydrocarbon sorbate employed should be one which is irreversibly sorbed on the substrate carbon (chemisorbed or polymerized) at a moderate temperature below that at which it is thermally cracked but which is cracked to deposit carbon in the presence of the substrate at more elevated temperature. Propylene is preferred as the hydrocarbon sorbate because it is gaseous at room temperature, is readily cracked at a significant rate in the presence of the carbon substrate at temperatures above 550-600°C and its $\Delta H$ for such cracking is near zero. Also, its minimum dimension is that best suited for treatment of an adsorbent carbon substrate having pores in the 0.5-0.55 nm range; that portion of the propylene that is only physically sorbed on the carbon substrate is readily removed by desorption under reduced pressure at temperatures below that at which significant cracking occurs.

Several workers have studied pyrolysis of propylene at elevated temperatures (>500°C) and reported in the literature that the main products of propylene decomposition are methane, ethylene and hydrogen. No carbon formation has been observed from cracking propylene in gas phase at a temperature up to 800°C. More recently, it has been shown that propylene at 800°C, in a quartz reactor alone, favors the production of hydrocarbon products rather than carbon deposition (Hoffman, W.P., "Chemisorption and Cracking of Propylene over Carbon-Active Sites," Ph.D. Thesis, The Pennsylvania State University, University Park, Pa. at pp. 70-75, (1979)). However, in the presence of a carbon substrate (Graphon), the main gas phase product was found to be hydrogen, indicating that, in this case, carbon deposition is favored over the production of gas phase hydrocarbons. In a blank run made by the present inventors, there was no observed carbon deposition on the quartz reactor walls at temperatures below 650°C.

In preparation of carbon molecular sieves according to the invention, it is important that the sorbate hydrocarbon be contacted with the carbon substrate at a temperature below the thermal cracking temperature of the hydrocarbon so as to effect its irreversible fixation at the pore aperture. Prior to treatment with the hydrocarbon sorbate, the substrate is degassed at elevated temperature, generally in the range of about 800 to 900°C, and then exposed to the hydrocarbon sorbate at a selected temperature in the range of 300-500°C for a predetermined time period. The temperature and duration of the required exposure will depend largely on the pore size distribution of the substrate. Following exposure to the hydrocarbon sorbate, the treated substrate is subjected to vacuum at the exposure temperature to draw off that portion of the hydrocarbon which is physically held, leaving a residual irreversibly held or chemisorbed hydrocarbon at the pore apertures. The thus impregnated substrate is then heated under vacuum at a temperature in the range of 800-900°C to crack the sorbed hydrocarbon and deposit pyrocarbon preferentially at the pore apertures of the substrate and in controlled amount, to adjust the size of the pore apertures to the minimum molecular dimension of the adsorbing species of the gas mixture to be separated.

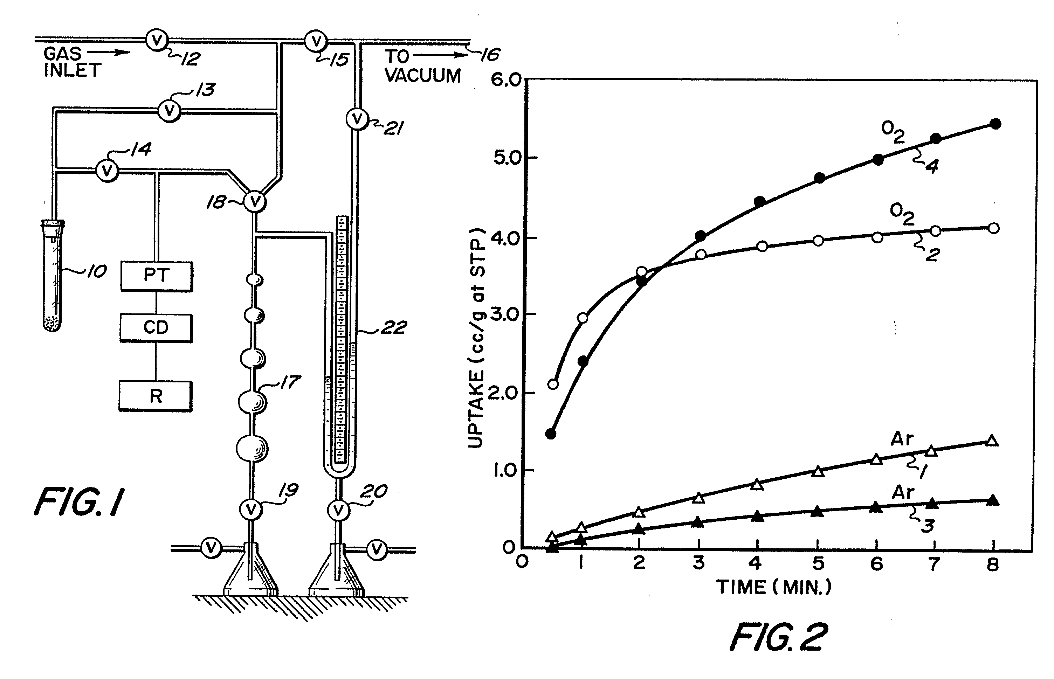

The sorption and carbonization runs of the examples below were carried out in conventional volumetric glass apparatus illustrated in Figure 1 of the drawings. A weighed amount of the carbon substrate was placed in the Vycor glass sample holder 10. Before the hydrocarbon sorption step in each of the runs, the substrate carbon was outgassed at a temperature of 825 or 850°C (±5°C) by closing valve 12 and opening valves 13 and 15 leading to vacuum line 16. Gas burette 17 was then degassed by closing valve 13 and opening valve 18 to vacuum, keeping valve 12 closed. Burette 17 was then filled with a measured amount of propylene introduced through opened valves 12 and 18; valves 13, 14 and 15 being closed. Then gas inlet valve 12 was closed and valve 18 opened to connect burette 17 with pressure transducer PT. Propylene from the burette was then permitted to flow into sample holder 10 through valve 14. In the initial runs made, a cylindrical sample holder 10 was employed so that gas from the sample holder was later evacuated by closing valve 14 and opening valves 13 and 15, leaving valve 18 open. Sample holder 10 and its contents were then heated to designated cracking temperature, with gaseous products of the cracking reaction being withdrawn into vacuum line 16, and pyrolysis carbon being deposited on the substrate carbon in sample holder 10.

The diffusion runs with argon (herein abbreviated Ar) and oxygen respectively were made after cooling down the substrate containing deposited carbon to about 25°C. Between the individual consecutive diffusion runs, the carbon sieve in the sample holder was outgassed at 110°C or at another temperature as hereinafter indicated.

The instrumentation of the laboratory equipment included manometer (M), pressure transducer (PT), carrier demodulator (CD) and recorder (R). Adjustment of mercury levels in the manometer was had through valves 19, 20 and 21.

During exposure to propylene (or other hydrocarbon sorbates) in a static system, the products of cracking, if any, may dilute the propylene envelope surrounding the carbon particle and thus slow down chemisorption of the hydrocarbon. Following the several initial runs, the sorption of propylene was carried out by flowing a stream of propylene through the carbon bed (beginning with Example 3). This was accomplished by substituting a U-shaped tube for sample holder 10 so that the introduced hydrocarbon sorbate entered through valve 13 into one leg of the U-tube, passing through the carbon bed therein and was discharged through the other leg which was in flow communication with vacuum line 16 via valves 13 and 15.

### EXAMPLE 1

a) A sample of as received Carbon "A" was initially tested for adsorption of oxygen and argon at ambient temperature and pressure. Argon and oxygen have very similar boiling points and critical temperatures. Their kinetic diameters ($\underline{Ar}$ = 0.340 nm; $O_2$ = 0.345 nm) are about the same, but these two molecules differ significantly in their widths ($\underline{Ar}$ = 0.384 nm; $O_2$ = 0.280 nm). The uptake of argon and $O_2$ (cc/g at STP) respectively, at one minute time intervals was determined and the results plotted, as shown on Figure 2 of the accompanying drawings. Curves 1 and 2 show the amount (cc/g) of argon and oxygen, respectively taken up by the substrate carbon with increasing time up to eight minutes.

b) The above sample of the as-received carbon "A" was outgassed at 825°C for thirty minutes and tested for argon and $O_2$ uptake. The results are shown by curves 3 and 4 of Figure 2. As is seen from these curves, as a result of the outgassing at the elevated temperature, oxygen uptake is increased while argon uptake is lowered. Evidently the thermal treatment opens up some of the fine pores of the substrate to provide additional adsorption space for $O_2$. The apertures of these pores, however, are small enough to restrict diffusion of argon. During the thermal treatment some of the pore apertures may be slightly reduced in size due to possible sintering or cracking of tar at these entrances so as to constrain diffusion of argon.

c) Another sample of Carbon "A" (Batch II) was outgassed at 825°C for thirty minutes as in (b) above and tested in consecutive order for adsorption of argon and oxygen respectively, the carbon being outgassed at 110°C for one hour between the argon and oxygen runs. The $O_2$/Ar ratios, at several time intervals of exposure to the gas, are reported in Table 1 (Runs 5 and 6) as compared to the as received Carbon A (runs 1 and 2).

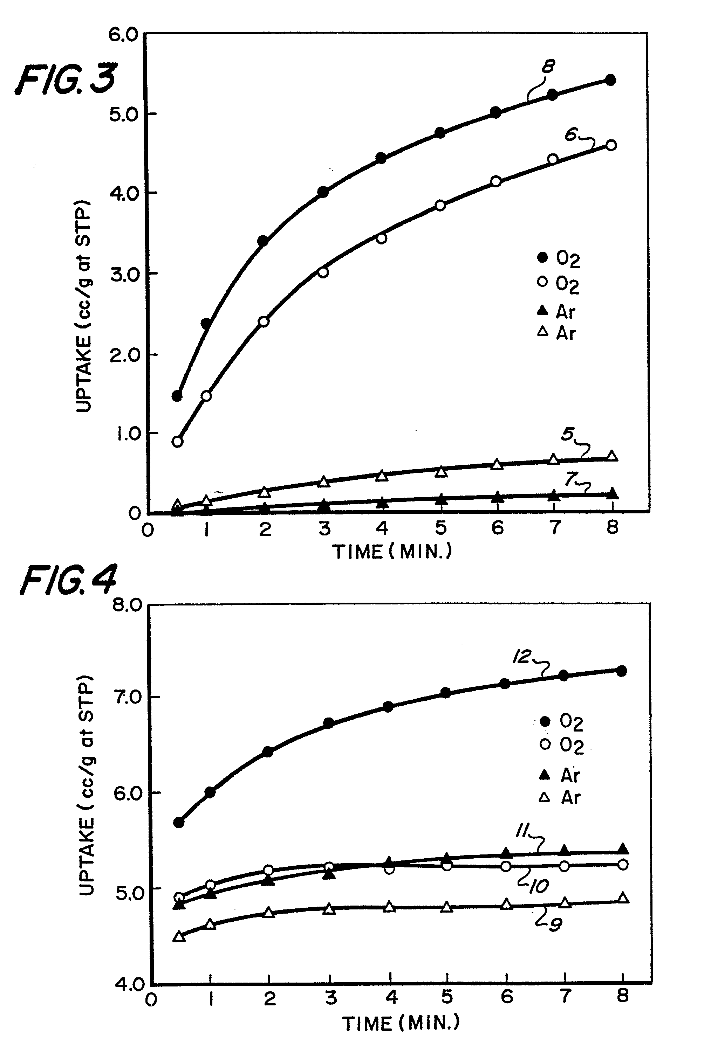

After outgassing at 110°C to remove adsorbed oxygen, the carbon following run 6 was brought to 300°C and held at that temperature while being exposed to propylene at a gas pressure of about 0.1 MPa. The measured quantity of adsorbed propylene in 30 minutes was 1.974 cc/g STP. The propylene-containing substrate was then outgassed under vacuum at 300°C for 15 minutes and the temperature raised to 825°C and held for 30 minutes to crack the propylene, thus depositing pyrocarbon on the substrate while eliminating gaseous product of the cracking. Oxygen and argon diffusion runs made on the treated carbon at 25°C are shown in Figure 3. Curves 5 and 7 show the amount of argon respectively taken up by the carbon before and after deposition of pryocarbon; curves 6 and 8 show the amount of oxygen taken up before and after deposit of pyrocarbon at the pore aperture.

- 12 -

The fall in argon diffusion indicates that the carbon atoms deposited from the cracking of propylene, narrow down some pore apertures to a size smaller than the minimum dimension of an argon molecule (0.384 nm). The modified carbon shows an improved $O_2/Ar$ adsorption ratio as compared to the as-received degassed carbon at each time interval and even when the adsorption runs on oxygen and argon were carried to thirty minutes, as shown in Table 1.

In all of these and subsequent diffusion runs, the test carbon adsorbent was outgassed at 110°C between argon and oxygen runs, unless another temperature is specified.

### TABLE 1

#### Effect of Depositing Carbon By Propylene Cracking on Carbon "A"

##### As received Carbon "A"

| Diffusion Run No. | | $O_2/Ar$ ratio at (min) | | | | |
|---|---|---|---|---|---|---|
| | | 0.5 | 1 | 3 | 5 | 30 |
| 1 | Ar | | | | | |
| | | 20.6 | 10.5 | 6.1 | 4.3 | 1.4 |
| 2 | $O_2$ | | | | | |

##### Degassed at 825°C for 0.5 hr

| | | | | | | |
|---|---|---|---|---|---|---|
| 5 | Ar | | | | | |
| | | 60.3 | 14.7 | 10.9 | 10.4 | 3.9 |
| 6 | $O_2$ | | | | | |

##### Adsorb propylene at 300°C – degas at 300°C/15 min then crack at 825°C

| | | | | | | |
|---|---|---|---|---|---|---|
| 7 | Ar | | | | | |
| | | 149 | 51.6 | 32.3 | 27.3 | 7.8 |
| 8 | $O_2$ | | | | | |

- 13 -

## EXAMPLE 2

Another series of runs were carried out using activated carbon MSC-V of 14 x 40 mesh size. MSC-V has a narrow pore size distribution, 0.5 to 0.55 nm. As seen in Figure 4, curves 9 and 10, argon and $O_2$ molecules diffuse alike on the as-received carbon and are not differentiated to any useful extent in adsorption on this carbon, since the argon and $O_2$ molecules are much smaller in size than 0.5 nm. The difference in adsorption, however, becomes appreciable on outgassing the carbon at 850°C for one hour (curves 11 and 12, Figure 4). As earlier indicated, the high temperature outgassing opens up some fine pores forming apertures wide enough to permit entrance of $O_2$. However, the $O_2$/Ar ratio is still sufficiently low that the use of this material as a molecular sieve for separation of argon and $O_2$ is not favored.

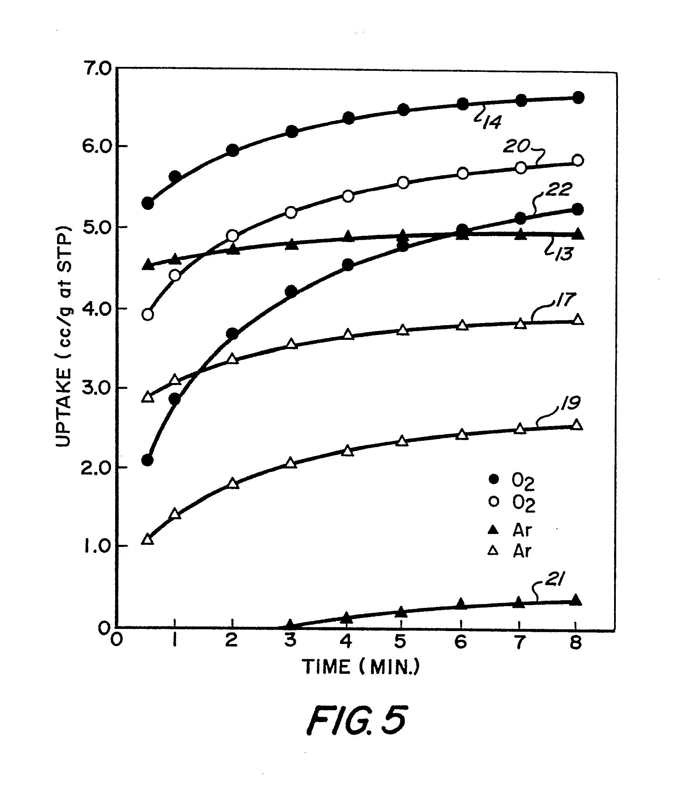

The MSC-V carbon (after being outgassed at 850°C) was then exposed to propylene at a gas pressure of 0.1 MPa for a known period at temperatures between 300-500°C with the uptake of a considerable amount of propylene. After pumping off of excess propylene under vacuum at the exposure temperature, the carbon was heated to 825-850°C also under vacuum. The order of the various consecutive argon and oxygen adsorption runs made on the obtained carbon sieve is shown in Table 2. The diffusion plots as to some of the runs are shown in Figure 5. The curves in Figure 5 bear the same numbers as the runs of Table 2.

The $O_2$/Ar ratio was found to improve with increasing carbon deposition. Each exposure to propylene followed by subsequent cracking, progressively deposits carbon atoms at the pore apertures narrowing them down to a size that increasingly restricts argon diffusion. As is evident from Figure 5 and the reported results in Table 2, the best $O_2$/Ar ratios were obtained by exposure of the carbon substrate to propylene under the conditions of runs 21 and 22. These runs exhibit phenomenal sieving character. High selectivity and capacity for $O_2$ is retained while the sieve becomes almost impermeable to argon. Moreover, the obtained results are reliably reproducible.

TABLE 2

Effect of Propylene Sorption at 300-500°C
and Cracking at 825°C on MSC-V Carbon

after outgassing 1 hour at 850°C

| Diffusion Run No. | | $O_2$/Ar ratio at (min) | | | | |
|---|---|---|---|---|---|---|
| | | 0.5 | 1 | 3 | 5 | 30 |
| 11 | Ar | | | | | |
| | | 1.2 | 1.2 | 1.3 | 1.3 | 1.5 |
| 12 | $O_2$ | | | | | |

Adsorb propylene at 300°C (uptake 12.8cc/g STP
in 16.5 hrs.) - degas at 300°C
and crack at 825°C for 1/2 hr.

| | | | | | | |
|---|---|---|---|---|---|---|
| 13 | Ar | | | | | |
| | | 1.2 | 1.2 | 1.3 | 1.3 | 1.4 |
| 14 | $O_2$ | | | | | |

Further adsorb propylene at 300°C
(uptake 12.5cc/g STP in 15.5 hrs) degas,
and then crack at 825°C for 1 hour

| | | | | | | |
|---|---|---|---|---|---|---|
| 15 | Ar | | | | | |
| | | 1.4 | 1.4 | 1.5 | 1.5 | 1.5 |
| 16 | $O_2$ | | | | | |

TABLE 2 (Continued)
Further adsorb propylene at 400°C for
17.5 hours, degas and then
crack at 825°C for 1 hr.

| 17 | Ar | | | | | |
|----|----|-----|-----|-----|-----|-----|
| 18 | $O_2$ | 1.5 | 1.4 | 1.3 | 1.3 | 0.8 |

Further adsorb propylene at 400°C for 12 hrs.,
degas and crack at 825°C for 1/2 hr.

| 19 | Ar | | | | | |
|----|----|-----|-----|-----|-----|-----|
| 20 | $O_2$ | 3.6 | 3.1 | 2.5 | 2.5 | 1.9 |

Further adsorb propylene at 500°C for 0.5 hr.,
degas and crack at 825°C for 1/2 hr.

| 21 | Ar | | | | | |
|----|----|----------|----------|-----|----|---|
| 22 | $O_2$ | $\infty$ | $\infty$ | 132 | 20 | 5 |

A study of the runs in this example demonstrates that by exposing the carbon substrate to propylene at a particular temperature and for a fixed time period at that temperature, depending upon the size of the pore entrance present in the original carbon substrate, the propylene is deposited or sorbed selectively at the pore apertures rather than inside on the pore walls, so that on subsequent cracking of the hydrocarbon thus taken up by the substrate, carbon molecular sieves of optimum selectivity and sorption capacity can be tailored for effective separation of components of a particular gas mixture, such as in the separation of oxygen and argon.

During exposure to propylene in a static system the products of cracking, if any, may dilute the propylene envelope surrounding the carbon particle and thus slow down the uptake of propylene. It is therefore of advantage to carry out the laydown of propylene by flowing a stream of propylene through a bed of the carbon substrate, as was done in Example 3 and subsequent runs carried out.

### EXAMPLE 3

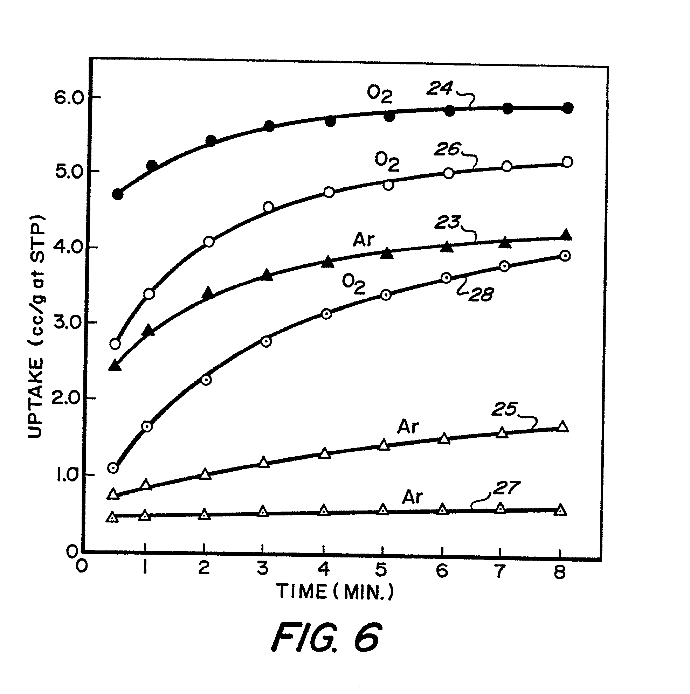

In a separate set of experiments, propylene was passed at 100 cc/min through a 1g bed of MSC-V carbon which had been outgassed at 850°C. The substrate carbon was heated isothermally at 500°C during exposure to the stream of propylene for a fixed period. It was then outgassed under vacuum for one hour at 500°C. Argon and $O_2$ diffusion runs were made at 25°C, after each treatment in propylene for a fixed time period as reported in Table 3. The diffusion plots are shown in Figure 6, with the run numbers on the curves corresponding to those of Batch I of Table 3. As seen from Table 3 and Figure 6, the $O_2$/Ar ratio is improved with increased sorption of propylene. Also the uptake of argon is considerably diminished after a total 40 minutes exposure to propylene while $O_2$ uptake is significantly higher. Thus, it appears, that the propylene molecules laid down reduce the size of pore entrances significantly to restrain argon diffusion, while permitting penetration by oxygen molecules.

### TABLE 3

#### Effect of Sorbing Propylene by Flowing Through the Carbon Bed at 500°C and Holding at That Temperature

Propylene through the carbon bed at 500°C for 15 minutes and outgassed 1 hr.

#### Batch I

| Diffusion Run No. | | $O_2/Ar$ ratio at (min) | | | | |
|---|---|---|---|---|---|---|
| | | 0.5 | 1 | 3 | 5 | 30 |
| 23 | Ar | | | | | |
| | | 2.0 | 1.7 | 1.5 | 1.5 | 1.3 |
| 24 | $O_2$ | | | | | |

Further propylene sorption at 500°C for 15 minutes and outgas 1 hour

| | | | | | | |
|---|---|---|---|---|---|---|
| 25 | Ar | | | | | |
| | | 3.6 | 3.8 | 3.8 | 3.4 | 2.1 |
| 26 | $O_2$ | | | | | |

Repeat propylene sorption at 500°C for 10 minutes and outgas 1 hour

| | | | | | | |
|---|---|---|---|---|---|---|
| 27 | Ar | | | | | |
| | | 2.6 | 3.6 | 5.5 | 6.0 | 5.6 |
| 28 | $O_2$ | | | | | |

#### Batch II (Example 4)

Propylene sorption at 500°C for 40 min. on 850°C degassed carbon and held at 500°C for 1 hour

| | | | | | | |
|---|---|---|---|---|---|---|
| 29 | Ar | | | | | |
| | | 6.2 | 6.5 | 6.7 | 6.2 | 3.2 |
| 30 | $O_2$ | | | | | |

Followed by cracking at 825°C for 1/2 hr.

| | | | | | | |
|---|---|---|---|---|---|---|
| 31 | Ar | | | | | |
| | | 5.4 | 7.3 | 9.3 | 10.3 | 5.3 |
| 32 | $O_2$ | | | | | |

EXAMPLE 4

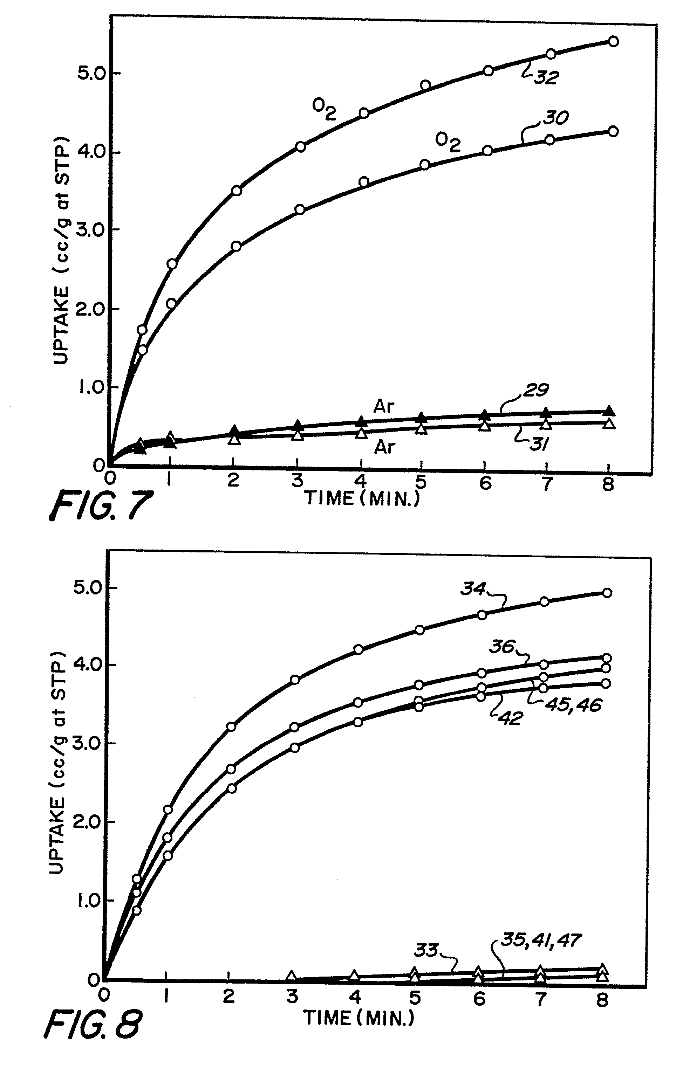

Propylene was passed for 40 minutes through another bed of 850°C outgassed MSC-V carbon held at 500°C. It was then outgassed under vacuum for one hour at 500°C. Diffusion plots of argon and $O_2$, as shown in curves 29 and 30 of Figure 7, closely resemble runs 27 and 28 of Figure 6 on the previous batch (Example 3). Evidently, similar amounts of propylene were sorbed in each set of experiments. However, when the carbon is heated to 825°C to crack the sorbed propylene and to clean the surface, uptake of oxygen is increased whereas argon uptake remains essentially unchanged (cf. runs 31 and 32, Figure 7). Apparently, on heating to 825°C the sorbed propylene is cracked to deposit carbon and the size of the pore apertures is changed due to decomposition of larger propylene molecules, allowing more rapid oxygen diffusion. Thus, the treatment provides additional volume as the gaseous products of propylene decomposition are eliminated. Also, some fine pores are made accessible to oxygen.

The extent of uptake or cracking of propylene on carbon can be followed in a TGA unit. Thus, by the method of the present invention, the pore apertures in substrate carbons, particularly those having a narrow pore-size distribution, can be adjusted to any desired size by controlled deposition of carbon through sorption of propylene or other hydrocarbon; thereby producing a carbon molecular sieve of desired sieving character, adsorption selectivity and capacity. Accordingly, by selecting appropriate treating conditons, specific pore-sized adsorbents can be produced to resolve a particular separation problem.

Adsorbent carbons show inherent attraction for oxygen and to some extent for water even under ambient conditions. A part of these species is held strongly at some active sites available on the carbon surface. These interactions encountered during storage of these adsorbents or during adsorption cycles involving their exposure to oxygen and/or water, in some way, seriously affect their adsorption selectivity and capacity. While desorption of oxygen and water can be employed effectively to regenerate these adsorptive carbons, such regeneration is considered an undesirable energy consuming step.

According to a preferred embodiment carbon molecular sieves in general, as well as the described carbon sieves of the present invention can be rendered inert toward oxygen and water and thus operate successfully in repeated adsorption-desorption cycles without any degradation in adsorption selectivity or capacity. Such passivation of the carbon adsorbent is effected by exposing the same to treatment with hydrogen at a temperature in the range of 100 to 200°C and at a pressure in the range of 3.4 to 6.8 MPa. By such treatment hydrogen is chemisorbed on all sites active to oxygen or water sorption. By such hydrogen treatment the carbon is made extremely hydrophobic and inert as will be seen from the following examples.

### EXAMPLE 5

A carbon molecular sieve prepared by pyrolysis of propylene in MSC-V carbon was used in a series of successive adsorption-desorption cycles on argon and oxygen respectively at 25°C. The order of the diffusion runs, the outgassing time and temperature between various adsorption cycles are summarized in

0146909

- 20 -

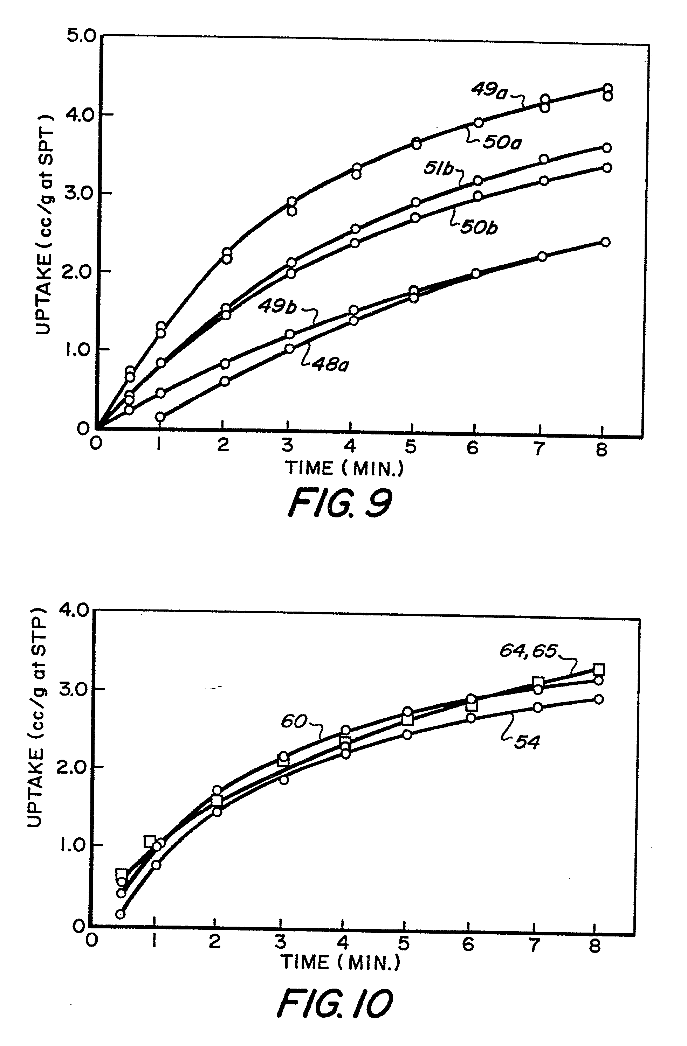

Table 4, which also shows the amount of each of these gases taken up in 8 minutes and in 30 minutes as well as the oxygen/argon ratio at time intervals from one-half to 5 minutes. Certain of these runs are plotted in Figure 8. From the reported data it is seen that $O_2$ uptake is significantly decreased after the first $O_2$ adsorption run. However, the fall in oxygen adsorption in subsequent runs is small. This demonstrates that most of the oxygen is sorbed on active sites during the first exposure. During the first ten adsorption runs an amount of oxygen equivalent to about 25% of the initial oxygen loading has been fixedly retained on the carbon, reducing its sorptive capacity. Uptake of argon between runs 33 and 41 falls about 28%. Apparently the sorbed oxygen on some of the pore apertures has reduced the size of these apertures enough to occlude some argon molecules. The residual oxygen retained on the surface of the carbon is fairly stable and is not significantly desorbed even at 110°C under vacuum (runs 45 and 46).

0146909

## TABLE 4

Cycle Adsorption-Desorption Studies on Pyrocarbon Deposited
MSC-V Carbon:  Effect of Storage in Dry and Moist Air

| Diffusion Run No. | Gas Used | Outgassing Temp. (°C) | Time (h) | Uptake (cc/g at STP) in (min) 8 | 30 | O$_2$/Ar ratio at (min) 0.5 | 1 | 5 |
|---|---|---|---|---|---|---|---|---|
| 33 | Ar | 110 | 1 | 0.20 | 1.28 | ∞ | ∞ | 54 |
| 34 | O$_2$ | 110 | 1 | 5.05 | 5.83 | | | |
| 35 | Ar | 25 | 1 | 0.13 | 1.06 | ∞ | ∞ | 224 |
| 36 | O$_2$ | 25 | 1 | 4.22 | 4.79 | | | |
| 37 | Ar | 25 | 1 | 0.20 | 1.07 | ∞ | ∞ | 167 |
| 38 | O$_2$ | 25 | 1 | 3.85 | 4.43 | | | |
| 39 | Ar | 25 | 1 | 0.10 | 0.95 | ∞ | ∞ | 209 |
| 40 | O$_2$ | 25 | 1 | 4.01 | 4.53 | | | |
| 41 | Ar | 25 | 1 | 0.10 | 0.92 | ∞ | ∞ | ∞ |
| 42 | O$_2$ | 25 | 1 | 3.89 | 4.36 | | | |
| 43 | Ar | 110 | 1 | 0.11 | 1.01 | ∞ | ∞ | ∞ |
| 44 | O$_2$ | 25 | 1 | 3.91 | 4.47 | | | |
| 45 | O$_2$ | 110 | 1 | 4.07 | 4.67 | | | |
| 46 | O$_2$ | 110 | 15 | 4.02 | 4.68 | ∞ | ∞ | ∞ |
| 47 | Ar | 110 | 1 | 0.11 | 0.85 | | | |

Sample (a) - Part of above batch kept in dry air at 25°C for 35 days.

| Diffusion Run No. | Gas Used | Outgassing Temp. (°C) | Time (h) | Uptake (cc/g at STP) in (min) 8 | 30 |
|---|---|---|---|---|---|
| 48a | O$_2$ | 25 | 1 | 2.47 | 2.75 |
| 49a | O$_2$ | 110 | 1 | 4.47 | 5.61 |
| 50a | O$_2$ | 110 | 20 | 4.31 | 5.61 |

Sample (b) - Second part of above batch kept under moist air ($H_2O$ rvp ∼ 1.0) at 25°C for 35 days.

| Diffusion Run No. | Gas Used | Outgassing Temp. (°C) | Time (h) | Uptake (cc/g at STP) in (min) 8 | 30 |
|---|---|---|---|---|---|
| 48b | Ar | 25 | 1 | 0.00 | 0.26 |
| 49b | O$_2$ | 25 | 1 | 2.48 | 4.50 |
| 50b | O$_2$ | 110 | 1 | 3.44 | 5.15 |
| 51b | O$_2$ | 110 | 15 | 3.66 | 5.16 |

5(a) The carbon after run 47 was divided into two parts and separately stored under dry and moist air ($H_2O$ rvp $\sim$ 1.0) at 25°C for 35 days. Diffusion runs made on these samples after storage are shown in Figure 9; the results are reported in Table 4a. As will be seen from the reported data, the sample stored in dry air does not show any permanent further deterioration; however, outgassing at 110°C was required to clean the surface, as is evident from diffusion runs 48a and 49a.

5(b) The carbon sample stored in moist air shows a considerable decrease in oxygen and argon sorption capacity after storage even when outgassed at 110°C for 15 hours (run 51b). Sorbed water markedly lowers the diffusion rates of oxygen and argon. For example, oxygen sorption of 4.02 cc/g in eight minutes (run 46) is reduced to 2.48 cc/g (run 49b) as a result of wet storage. It appears that water sorbed near the pore apertures obstructs oxygen molecules and lowers its diffusion rate. Water molecules are known to interact with certain oxygen functional groups on the carbon surface and are strongly held; if held inside the pore, adsorption volume is considerably lowered. Outgassing at 110°C improves the rate of oxygen diffusion to some extent, but as shown, the rate is still considerably lower [cf runs 46 and 51b].

Hydrophobicity of carbon molecular sieves is of prime importance in altering their preferential sorption of water. It can enhance only if all those sites susceptible to attack by $O_2$ or $H_2O$ are passivated. Chemisorption of hydrogen on all such sites is a means of preventing these interactions. Such chemisorption of hydrogen on the carbon substrate under pressure and at temperatures in the range of 100 to 200°C was found effective for the purpose. Reaction with hydrogen at a pressure of 0.1 MPa at 250°C for 40 hours was found to only slightly improve the stability of the carbon sieve.

## EXAMPLE 6

(a)  A modified MSC-V carbon (similar to that of Example 5) was treated with $H_2$ at 150°C for 72 hours at a pressure of 5.4 MPa ($=$800 psig), before exposure to $O_2$ or air.  At this temperature there is no gasification of carbon in hydrogen.  The treatment was found to impart extreme hydrophobicity to the carbon sieve.  Recycle runs thereon with oxygen and argon at 25°C are set out in Table 5.  Four representative diffusion plots are shown for comparison in Figure 10.  As is seen from Table 5, oxygen loading in 8 or 30 minutes remains unaffected during several recycle runs, even when the sample is desorbed at the adsorption temperature.  This evidently indicates that oxygen finds no free sites on the carbon to react with and only fills the adsorption volume.  The conclusion follows that the chemisorbed hydrogen has passivated all sites susceptible to oxidation.  The chemisorbed hydrogen thus prevents the dissociative chemisorption of oxygen.  Hydrogen chemisorbed at the pore apertures also reduces their size, blocking the diffusion of argon to a noticeable extent, as is seen from runs 52 and 53 (Table 5).  Such chemisorbed hydrogen is very stable.

(b) The above sample, after various recycle runs was stored under moist air ($H_2O$ rvp $\sim$ 1.0) at 25°C.  Oxygen diffusion runs made after 35 days storage are included in Table 5 and plotted in Figure 10. It is seen that on outgassing at 110°C for one hour, oxygen adsorption capacity and its rate of diffusion are fully restored (run 64). This clearly shows that negligible water molecules are held strongly to the carbon surface during the storage period. However, heating to 110°C is required to remove water occupying the pore volume.

## TABLE 5

Diffusion Studies on Pyrocarbon Deposited
MSC-V Carbon Treated in Hydrogen at 800 psig and 150°C

| Diffusion Run No. | Gas Used | Outgassing Temp. (°C) | Time (h) | Uptake (cc/g at STP) in (min) 8 | 30 | $O_2$/Ar ratio at (min) 0.5 | 1 | 5 |
|---|---|---|---|---|---|---|---|---|
| 52 | Ar | | 1 | 0.41 | 1.26 | | | |

Exposed to $H_2$, 800 psig at 150°C for 72 hours.

| Diffusion Run No. | Gas Used | Outgassing Temp. (°C) | Time (h) | 8 | 30 | 0.5 | 1 | 5 |
|---|---|---|---|---|---|---|---|---|
| 53 | Ar | 110 | 1 | 0.00 | 0.00 | ∞ | ∞ | ∞ |
| 54 | $O_2$ | 110 | 1 | 2.97 | 3.85 | | | |
| 55 | Ar | 25 | 1 | 0.00 | 0.10 | ∞ | ∞ | ∞ |
| 56 | $O_2$ | 25 | 1 | 3.01 | 3.91 | | | |
| 57 | Ar | 25 | 1 | 0.00 | 0.40 | ∞ | ∞ | ∞ |
| 58 | $O_2$ | 25 | 1 | 3.19 | 4.03 | | | |
| 59 | Ar | 25 | 1 | 0.00 | 0.37 | ∞ | ∞ | ∞ |
| 60 | $O_2$ | 25 | 1 | 3.06 | 3.89 | | | |
| 61 | $O_2$ | 25 | 1 | 3.12 | 4.01 | ∞ | ∞ | ∞ |
| 62 | Ar | 110 | 1 | 0.00 | 0.48 | | | |

Sample kept under moist air ($H_2O$ rvp ∿1.0) at 25°C for 35 days.

| Diffusion Run No. | Gas Used | Outgassing Temp. (°C) | Time (h) | 8 | 30 | 0.5 | 1 | 5 |
|---|---|---|---|---|---|---|---|---|
| 63 | $O_2$ | 25 | 1 | 2.02 | 3.43 | | | |
| 64 | $O_2$ | 110 | 1 | 3.18 | 4.96 | | | |
| 65 | $O_2$ | 110 | 15 | 3.31 | 5.06 | | | |

It may be noted that the foregoing experimental tests were carried out under high relative pressures of water. Regeneration is expected to be easier and more efficient if the carbon is stored in air under normal levels of relative humidity. It is, therefore, concluded that treatment with hydrogen at an elevated pressure makes the carbon sieve extremely hydrophobic and inert. Thus, such treatment imparts greater stability to the carbon sieves; it prevents their aging and helps retain their sorbent capacity even following extensive use.

While the hydrogen passivating treatment is herein described as applied, particularly to carbon molecular sieves produced by incorporation of pyrocarbon in a sorptive carbon substrate, it will be appreciated that such hydrogen treatment can be applied to other gas sorbing carbons which suffer loss in adsorbent capacity or selectivity on prolonged exposure to oxygen and/or water.

Although the selective adsorption characteristics of the carbon sieves made in accordance with the invention were herein demonstrated by experimental runs on argon and oxygen, it will be understood that these carbon sieves are likewise effective in separation of other gas mixtures containing components which similarly differ in their kinetic rate of diffusion into adsorbents having pores of a size range intermediate to that of the gas components desired to be separated, such as in the separation of oxygen from admixture with nitrogen. For effective separation of particular gases, of course, the pore size of the carbon adsorbent utilized needs to be tailored or adjusted by selective carbon deposition at the pore apertures in accordance with the dimensions of the gas components sought to be separated.

When using propylene as the hydrocarbon sorbate for selective deposition of pyrocarbon at the orifices of the pores, optimum selectivity at high adsorption capacity is attained by

(a) initially outgassing the starting carbon substrate at temperatures in the range of 800 to 1000°C for at least about 1 hr.;

(b) cooling the outgassed carbon substrate to a temperature in the range of 300 to 500°C, preferably to about 450 to 500°C, at which temperature propylene is passed through a bed of the substrate for a desired period;

(c) the propylene-containing carbon is then outgassed under vacuum, preferably at about the same temperature at which it was sorbed, to remove that portion of the propylene which is only physically held, leaving the remaining propylene at the apertures of the pores;

(d) then subjecting the carbon containing the fixedly held propylene to cracking at temperatures significantly above the sorption temperature, preferably at temperature in the range of 800 to 900°C, for at least 1 hr.

If the above produced carbon sieve is to be held or stored under conditions that it may be exposed to an atmosphere comprising moisture or oxygen, it is best to passivate the carbon sieve by treatment with hydrogen as hereinbefore described.

- 27 -

In using hydrocarbon sorbates other than propylene, such as a number of other olefins beyond propylene or smaller aromatics, the same sequences of treatment and general ranges of temperatures indicated may be employed; for optimum results, however, the process variables for carbon deposition need be empirically established to suit the particular hydrocarbon sorbate, the starting carbon substrate and the desired ultimate pore size for the selective gas separation in which it is to be employed.

What is claimed:

1. the method of preparing molecular sieve carbons having pore apertures of controlled size range, which comprises initially degassing a micropore-containing carbon substrate at an elevated temperature, cooling the degassed carbon substrate to an intermediate temperature in the range of 300 to 500°C and exposing the cooled carbon at said temperature to contact with a hydrocarbon in vapor form to sorb said hydrocarbon therein, removing physically held hydrocarbon from said carbon substrate by degassing the same under vacuum and at about said exposing temperature, thereafter cracking remaining hydrocarbon fixedly held at the pore apertures of said substrate at a higher temperature thereby depositing pyrocarbon at the said pore apertures.

2. The method as defined in Claim 1 wherein said initial degassing is carried out at a temperature in the range of 800-900°C.

3. The method as defined in Claim 2 wherein said cracking is effected at a temperature in the range of 800-900°C.

4. The method as defined in Claim 1 wherein said starting carbon substrate is one having a pore size in the range of about 0.5 to 0.55 nm.

5. The method as defined in Claim 4 wherein said sorbed hydrocarbon comprises propylene.

6. The method as defined in Claim 5 wherein said cracking is effected at a temperature in the range of 800-900°C while positively withdrawing gaseous products of said cracking.

7. The method as defined in Claim 1 wherein said carbon substrate containing deposited pyrocarbon is passivated by treatment with hydrogen under superatmospheric pressure to protect the same against loss of gas-sorption capacity and/or selectivity on exposure to an environment comprising moisture and/or ~~nitrogen.~~ oxygen.

8. The method as defined in Claim 7 wherein said hydrogen treatment is carried out at a temperature in the range of 100 to 200°C.

9. The method of passivating gas-sorbing carbon against loss of sorption capacity and/or selectivity by exposure to moisture and/or oxygen, which comprises subjecting said carbon to treatment with hydrogen at superatmospheric pressure and at a temperature in the range of 100 to 200°C.

10. The method of removing oxygen from a gas mixture containing oxygen and argon which comprises subjecting such gas mixture to selective oxygen adsorption by a molecular sieve carbon produced by the process of Claim 1 said carbon sieve having a controlled pore aperture diameter greater than 0.280 nm but less than 0.384 nm.

0356P

11/14/83

FIG.1

FIG.2

FIG.3

FIG.4

FIG. 5

FIG. 6

FIG. 7

FIG. 8

FIG. 9

FIG. 10